# EUROPEAN PATENT SPECIFICATION

(11) **EP 4 020 851 B1**
(45) Date of publication and mention of the grant of the patent: **22.02.2023**
(21) Application number: 21200288.5
(22) Date of filing: 30.09.2021
(51) Int. Cl.: B60K 37/06, B60K 35/00, H04B 11/00

(54) **REMOTE CONTROLLER**
FERNSTEUERGERÄT
ORGANE DE COMMANDE À DISTANCE

(30) Priority: 22.12.2020 JP 2020212385
(43) Date of publication of application: 29.06.2022
(73) Proprietor: Suzuki Motor Corporation, Hamamatsu-shi, Shizuoka 432-8611 (JP)
(72) Inventor: MIURA, Shin, Hamamatsu-shi, 432-8611 (JP)
(74) Representative: Haseltine Lake Kempner LLP

(56) References cited:
- CN-A- 108 528 330
- US-A- 5 432 755
- US-B2- 9 783 137

## Description

### BACKGROUND OF THE INVENTION

### Field of the Invention

The present invention relates to a quality checking technique for ultrasonic communication to be performed between a target in-vehicle device and a control terminal.

### Description of the Related Art

In recent years, technology has been developed for a driver in a traveling vehicle to remotely control target in-vehicle devices such as an air conditioner and a navigation system with the use of a portable terminal and/or a remote controller (hereinafter, collectively referred to as a "control terminal"). Radio wave communication or infrared communication is often used as a means of the communication between the target in-vehicle device and the control terminal, in addition to ultrasonic communication using ultrasonic waves. Note that ultrasonic waves are susceptible to radio disturbance when disturbance such as an environmental sound occurs in the inaudible sound range (about 18 kHz or more) to be used for the ultrasonic communication. For example, the sound of rubbing a vinyl bag contains a frequency component in the inaudible range, and such a sound deteriorates the communication quality of the ultrasonic communication. Patent Document 1 (JP 2015-063284 A) discloses conventional technique.

The communication quality of the ultrasonic communication changes from moment to moment depending on the environment around the vehicle, as exemplified by the traffic conditions at that time, the outside temperature, the weather, and the driving mode. In order for an operator of remote control to remotely control the in-vehicle devices comfortably, it is desirable for the operator to accurately grasp the change in communication environment.

### SUMMARY OF THE INVENTION

In view of the above-described circumstances, an object of the present invention is to provide a remote controller that allows an operator of remote control to accurately grasp the communication environment.

A Remote Controller according to an aspect of the present invention includes a speaker, an information receiver, a controller and a display. The speaker is configured to send an ultrasonic signal that controls an operation of at least one in-vehicle device. The information receiver is configured to detect information related to noise sound inside a vehicle. The controller is configured to calculate a propagability index of the ultrasonic signal from the information related to noise sound. The display is configured to display the propagability index as communication quality level of the ultrasonic signal. The information receiver is configured to measure degree of change in operating mode of the at least one in-vehicle device that changes the operating mode based on the ultrasonic signal. The controller is configured to recalculate the propagability index based on the degree of change and update display of the communication quality level.

The present invention provides a remote controller that allows an operator of remote control to accurately grasp the communication environment.

### BRIEF DESCRIPTION OF THE DRAWINGS

In the accompanying drawings:
Fig. 1 is a conceptual configuration diagram illustrating a vehicle in which the remote controller according to one embodiment and in-vehicle devices are installed;
Fig. 2A and Fig. 2B are schematic diagrams illustrating a smartphone that is one aspect of the remote controller according to the embodiment;
Fig. 3 is a schematic view of the inside of the vehicle provided with in-vehicle devices that are remotely controlled by the remote controller according to the embodiment, when viewed from the roof side;
Fig. 4A is a table illustrating a map of the delay time to start measuring for each operation;
Fig. 4B is a table illustrating a map of an addition time for each change timing of the running state; and
Fig. 5 is a flowchart illustrating the processing to be performed by the in-vehicle devices and the remote controller according to the embodiment.

### DETAILED DESCRIPTION

Hereinbelow, embodiments of the present invention will be described by referring to the accompanying drawings.

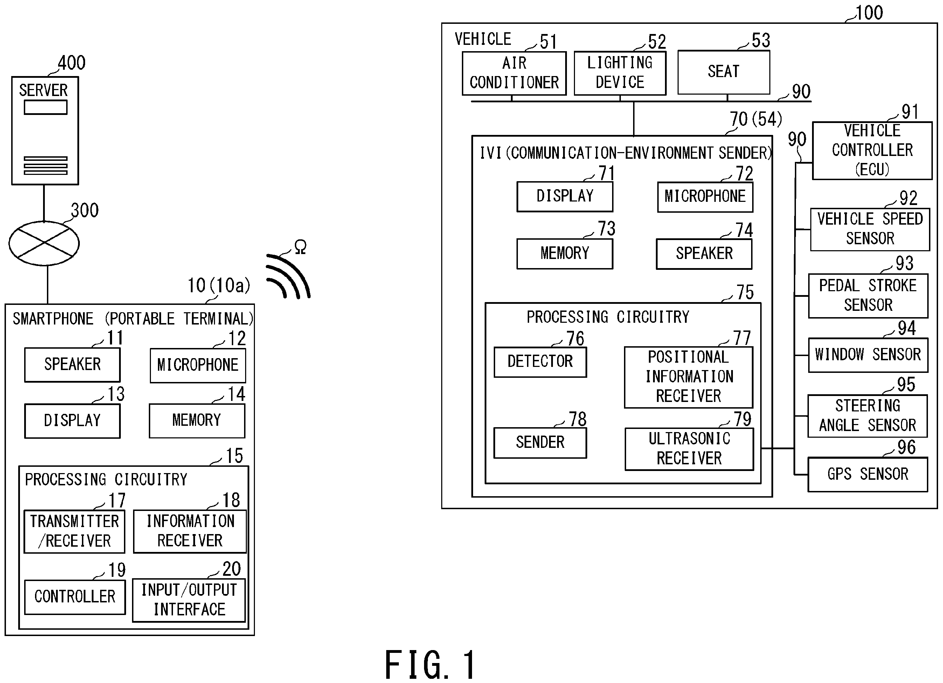

First, a description will be given of a remote controller 10 and in-vehicle devices 51, 52, 53, and 54 (hereinafter, referred to as "target in-vehicle devices 51 to 54"), which are operated by this remote controller 10 with the use of an ultrasonic signal Ω, by referring to Fig. 1 to Fig. 4B.

Fig. 1 is a conceptual configuration diagram illustrating a vehicle 100 in which the remote controller 10 according to the present embodiment and the target in-vehicle devices 51 to 54 are installed.

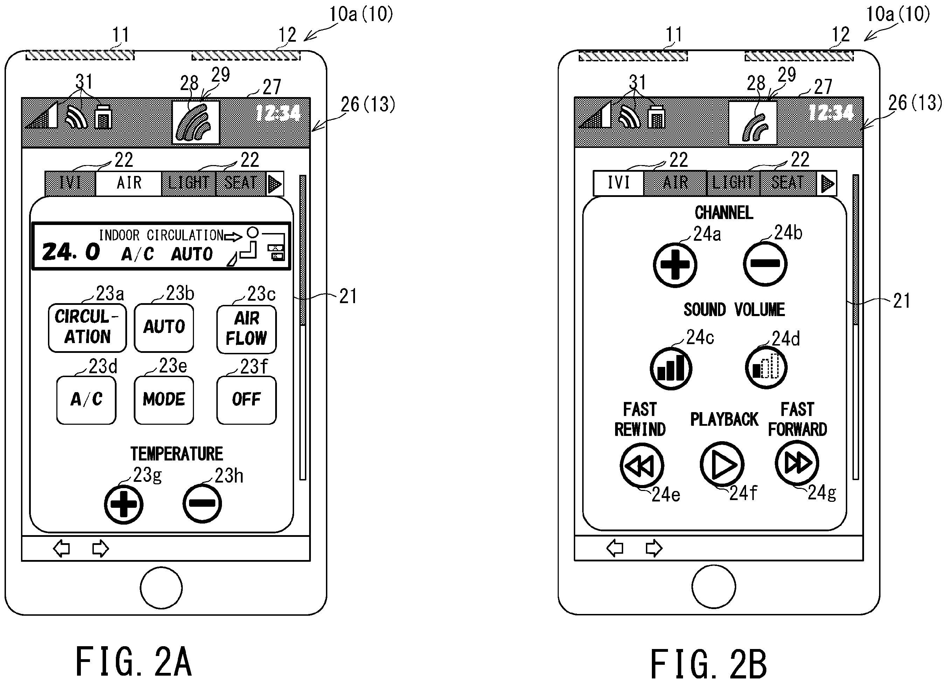

Fig. 2A and Fig. 2B are schematic diagrams illustrating a smartphone 10a that is one aspect of the remote controller 10 according to the present embodiment.

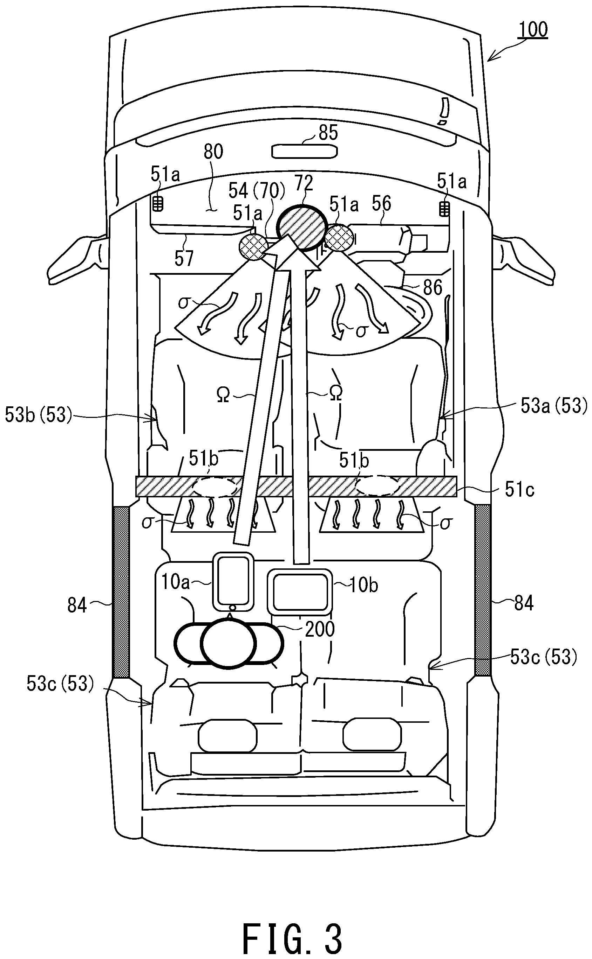

Fig. 3 is a schematic view of the inside of the vehicle 100 provided with the target in-vehicle devices 51 to 54, when viewed from the roof side.

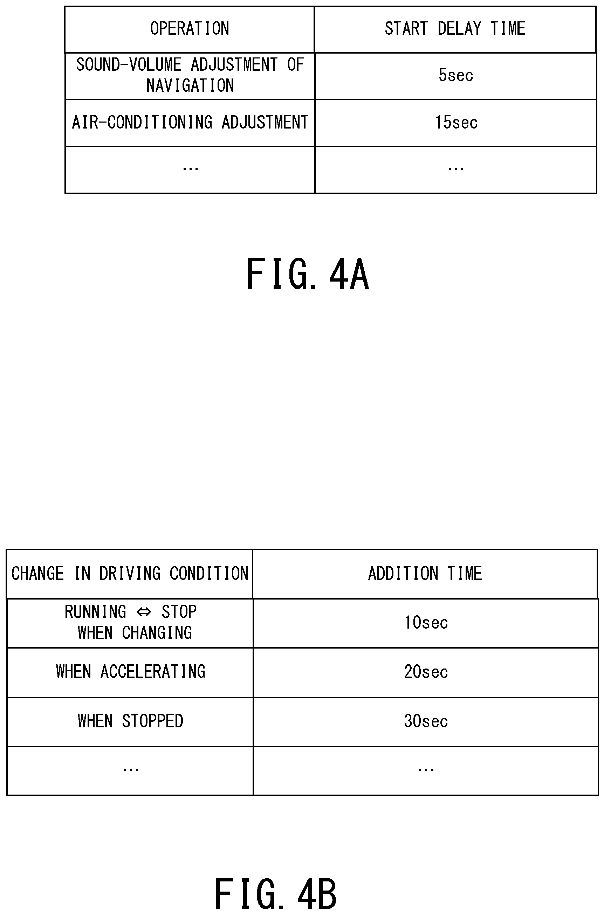

Fig. 4A is a table illustrating a map of the delay time to start measuring for each operation.

Fig. 4B is a table illustrating a map of an addition time for each change timing of the running state.

### <Remote Controller 10>

The remote controller 10 is a portable terminal (i.e., mobile terminal) 10a owned by a user 200, as exemplified by a smartphone shown in Fig. 2A and Fig. 2B. The remote controller 10 may also be a PC (Personal Computer), a wearable device, a public terminal, a specially designed and manufactured remote controller, and/or an in-vehicle operation terminal 10b installed around the rear seat 53c (Fig. 3).

In the following embodiments, a description will be given of a case where the smartphone (i.e., portable terminal) 10a is used as the remote controller 10 by installing an application program developed for remote control in the smartphone 10a.

The remote controller 10 includes a speaker 11, a microphone 12, a display 13, a memory 14, and processing circuitry 15 as shown in Fig. 1.

The memory 14 is configured as, for example, a ROM (Read Only Memory), a RAM (Random Access Memory), and/or an HDD (Hard Disk Drive).

The processing circuitry 15 implements respective functions of a transmitter/receiver 17, an information receiver 18, a controller 19, and an input/output interface 20 by executing the programs stored in the memory 14.

The transmitter/receiver 17 transmits an ultrasonic signal Q that controls the operation of the target in-vehicle devices 51 to 54 via the speaker 11. The speaker 11 may be an existing speaker provided for audio or may be a dedicated speaker separately provided for the ultrasonic communication. The target in-vehicle devices 51 to 54 to be remotely controlled by this ultrasonic signal Q are, for example, an air conditioner 51, a lighting device 52, a seat 53, and an IVI (In-Vehicle Infotainment) 54. The target in-vehicle devices are not particularly limited to the above aspects as long as they are electronically controllable in-vehicle accessories such as a locking mechanism of a door opening/closing lever, an in-vehicle camera, a conventional navigation system, and an audio device.

The IVI 54 is, for example, a system that provides various functions such as a navigation function, a location information service function, a multimedia reproduction function of music and video, a voice communication function, a data communication function, and an Internet connection function in a complex manner.

The IVI 54 will be described in detail in the description of the vehicle 100 described below.

Each of the target in-vehicle devices 51 to 54 is connected by a communication network 90 in the vehicle such as a CAN (Controller Area Network) and a LIN (Local Interconnect Network). For example, the IVI 54 is provided with an ultrasonic receiver 79, and the ultrasonic receiver 79 receives the ultrasonic signal Q emitted by the remote controller 10. Further, the IVI 54 serves as a repeater (i.e., relay device) so as to transmit an operation instruction to the target in-vehicle devices 51 to 54 via the communication network 90.

The entire system may be configured such that each of the target in-vehicle devices 51 to 54 is provided with its own ultrasonic receiver 79 and is directly and remotely controlled by the remote controller 10 so as to exert its function. In response to remote control, for example, in the case of the multimedia reproduction function of the IVI 54, the functions of start, stop, volume increase/decrease, media reproduction, fast-forward or fast-rewind are executed.

In the following, a description will be given of a case where the IVI 54 among the target in-vehicle devices 51 to 54 is remotely controlled and the IVI 54 includes a microphone 72 that can detect ultrasonic waves and is provided on the display 71 between the driver's seat 53a and the passenger seat 53b on the inner panel 80 as shown in Fig. 3.

The command of the ultrasonic communication may be acquired from a server 400 connected by the Internet 300. In addition, the entire system may be configured such that basic commands are stored by the memories 14 and 73 of the respective devices 10 and 70 and additional commands are acquired from the server 400.

Returning to the description of the remote controller 10, the information receiver 18 detects information related to noise sound inside the vehicle 100 (hereinafter, referred to as "noise-related information").

The noise-related information is information on disturbance that hinders the ultrasonic communication and disturbance factors, as exemplified by the velocity or the acceleration of the vehicle 100, the opening degree of the window 84, and the air-flow volume of the air conditioner 51.

For example, the conditioned air σ to be sent from an air outlet 51a of the air conditioner 51 in Fig. 3 forms a temperature interface between the microphone 72 of the IVI 54 and the portable terminal 10a to be operated by the user 200 due to the temperature difference from the ambient air.

The conditioned air σ blown from the air outlet 51a of the front-seat air conditioner and the air outlet 51b of the rear-seat air conditioner flows between the IVI 54 and the portable terminal 10a held by the user 200 seated in the rear seat 53c. When the ultrasonic signal Ω enters the temperature interface formed between the conditioned air σ and the ambient air, the ultrasonic signal Ω is disturbed by reflecting and refracting at the temperature interface, which may have a great influence on the ultrasonic communication.

Thus, the information receiver 18 acquires the blowing sound in the vehicle 100 through the microphone 12 of the portable terminal 10a.

Further, when the air conditioner 51 is operated, the operating sound of the air conditioner 51 is also generated, as exemplified by the motor sound and the sound of conditioned air σ that contacts the fins of the air outlets 51a and 51b at the time of blowing out of the air outlets 51a and 51b. Since these operating sounds may include ultrasonic waves that cause disturbance in the frequency band to be used for the ultrasonic signal Ω, these operating sounds are also included in the noise-related information. The information receiver 18 may directly acquire the ultrasonic waves included in the operating sounds of the devices in the vehicle 100 as the noise-related information.

Even in the case where the microphone 12 cannot detect ultrasonic waves, when the information receiver 18 has acquired how to estimate ultrasonic waves from the operating sound by a learning method such as machine learning, the information receiver 18 can accurately estimate the ultrasonic components from the operating sound of the in-vehicle device by using the existing microphone 12. In particular, when the information receiver 18 has learned the obstacle frequency range peculiar to the vehicle 100 in advance, the noise sound that is generated inside the vehicle and seems to be unrelated at first glance can be included in the noise-related information.

The information receiver 18 may grasp the traveling speed of the portable terminal 10a by the GPS function installed in the portable terminal 10a so as to detect the traveling state of the vehicle 100. The types of the ultrasonic waves generated at the time of accelerating rapidly, at the time of traveling electrically or at the time of coasting can be distinguished.

The controller 19 uses the acquired noise-related information to calculate degree of smoothness of wireless communication (i.e., probability of successfully transmitting the wireless signal to the receiving side in terms of disturbance factors, and hereinafter, referred to as a "propagability index") for the ultrasonic signal Q. For example, when the blowing noise is loud, it can be estimated that the air circulation inside the vehicle is strong and the propagability index of the ultrasonic signal Ω is low. When the ultrasonic wave contained in this blowing noise has a frequency far from the frequency of the ultrasonic signal Q, the influence on the propagability index is small.

In addition, the controller 19 also calculates the intensity of the disturbance to be generated by the operating sound of the air conditioner 51 in the ultrasoniccommunication frequency band so as to calculate the propagability index from this intensity.

Ultrasonic waves can also be generated from, for example, the inflow and outflow of air due to opening of the window 84, the opening and closing sound of the window 84, and the switching noise to be generated from the driving source of the vehicle 100 and the battery. Since these noises may also hinder the ultrasonic communication, such noises are also included in the noise-related information.

The memory 14 may stores a map of the delay time to start measuring and a map of a prohibited time as describe below.

Fig. 4A is a table illustrating the map of the delay time to start measuring for each operation.

Fig. 4B is a table illustrating the map of the addition time for each change timing of the running state.

The delay time to start measuring is the period from the transmission timing of the ultrasonic signal Q (hereinafter, referred to as the control signal) to the timing to start measuring the propagability index. As shown in Fig. 4A, the delay time is defined for each device to be remotely controlled, as exemplified by the air conditioner 51 corresponding to adjustment of air-conditioning in Fig. 4A and the IVI 54 corresponding to sound-volume adjustment of navigation in Fig. 4A. That is, the information receiver 18 measures the propagability index after the elapse of the delay time from the transmission timing of the ultrasonic signal Q.

When a control signal Q is sent to the target in-vehicle devices 51 to 54, it sometimes takes time for target in-vehicle devices 51 to 54 to change the operating state depending on the function to be exerted in response to the control signal Ω. Since the driver might feel uncomfortable with a sudden increase in air-flow volume, the air conditioner 51 is controlled to gradually increase the air-flow volume in some cases. For this reason, the delay time to start measuring is set to the acquisition timing of the surrounding environment by the microphone 12 of the portable terminal 10a to be delayed by the delay time from the transmission timing of the control signal Ω. Setting the delay time enables the quality level of the ultrasonic communication to be acquired at an appropriate timing.

The time length to change the state after receiving the control signal Ω by the ultrasonic communication depends on the respective function to be achieved by the target in-vehicle devices 51 to 54. Therefore, the delay time should differ depending on each vehicle devices 51 to 54 to which the delay times are set. Setting the different delay time enables the information receiver 18 to measure the change in the operation at the timing when the function of the operation changed by remote control is fully exhibited, which is to be reflected in the propagability index.

In other words, the information receiver 18 receives feedback on the change in operation of the target in-vehicle devices 51 to 54 due to the control signal Q, recalculates the propagability index from the change in noise-related information, and updates the display of the communication quality level on the display 13.

As shown in Fig. 4B, the addition time is the time to be added to the delay time to start measuring depending on the changing mode when the vehicle state changes during the delay time.

When the running state of the vehicle 100 changes, the propagability index of the ultrasonic communication temporarily improves or deteriorates. Thus, when the running state changes during the delay time to start measuring, it is preferred to add the additional time to the delay time in order to suppress the influence of the change in running state on the propagability index of the ultrasonic communication.

The display 13 is, for example, a touch panel having both of an input device for inputting data according to an operation of the user 200 and a display device such as a liquid crystal display device for displaying data.

As shown in Fig. 2A and Fig. 2B, for example, the operation page 21 of "IVI", "air conditioner", "lighting", and "seat" are displayed on the display 13 in a switchable manner like the tab 22.

For example, Fig. 2A illustrates the operation page 21 for operating the air conditioner 51, and Fig. 2B illustrates the operation page 21 for operating the IVI 54. On the operation page 21 of the air conditioner 51 in Fig. 2A, the air conditioner 51 is adjusted by remote operation with the use of eight buttons 23a to 23h such as a circulation switching button 23a, an AUTO button 23b, an air-flow volume button 23c, and a compressor drive button 23d.

When the tab 22 of "IVI" is touched, the screen is switched to the operation page 21 of the IVI 54 of Fig. 2B, and the IVI 54 is remotely controlled with the use of various buttons 24a to 24g such as the channel buttons 24a and 24b.

Although it is not shown, the brightness adjustment and ON/OFF of the lighting device 52 are remotely controlled. For the seat 53, the reclining angle adjustment and the front-rear position adjustment are remotely controlled.

On the status bar 27 at the upper end of the display 13 (i.e., display screen 26), various icons 31 indicating the remaining battery level of the portable terminal 10a and the state of the radio field strength for wireless communication are displayed.

In the portable terminal 10a according to the present embodiment, the display 13 displays the calculated propagability index as the communication quality level of the control signal Ω, for example, on the status bar 27.

The communication quality level is represented in four stages by zero to three arcs 28 as shown in Fig. 2A and Fig. 2B, for example.

When the communication environment of the control signal Q is satisfactory and the propagability index is high, three arcs 28 are displayed by the icon 31 as shown in Fig. 2A. When the propagability index declines by one level from the state of Fig. 2A, two arcs 28 are displayed as shown in Fig. 2B.

The display format of the communication quality level is not limited to the fan-shaped icon 31 in which the arcs 28 shown in Fig. 2A and Fig. 2B are arranged concentrically, and the communication quality level may be represented by, for example, the number of antenna bars or numbers.

The display position of the communication quality level is not particularly limited to the status bar 27, and may be anywhere on the display screen 26 as long as the user 200 can visually recognize it.

In accordance with the propagability index, notification of specific actions for improving the propagability index may be executed for the user 200. In detail, the display 13 may display instruction words such as "Please direct the portable terminal toward the in-vehicle receiver" and/or "Please bring the portable terminal closer to the in-vehicle receiver". Instead of displaying the notification on the display screen 26, the notification may be made by voice, and the notification aspect is not limited to a specific method. When the specific action is notified in this manner, the user can not only grasp that the communication quality level is low but also take specific measures to raise the communication quality level by himself/herself.

Since the portable terminal 10a has such a communication environment checking function, the user 200 can check the communication quality level on the remote controller 10 before or during the remote control and can grasp whether the ultrasonic communication can be used or not.

When the user repeatedly uses the communication environment checking function, the user will be able to predict under what circumstances the ultrasonic communication will be difficult to use.

### <Vehicle 100>

Next, a description will be given of the vehicle 100 provided with the target in-vehicle devices 51 to 54 to be remotely controlled by referring to Fig. 1, Fig. 3, Fig. 4A and Fig. 4B.

The vehicle 100 is provided with a vehicle controller (i.e., ECU or Electronic Control Unit) 91, various sensors 92 to 96, and the target in-vehicle devices 51 to 54.

These devices 91 to 96 are interconnected by the communication network 90 to exchange information.

The ECU 91 is configured as a plurality of in-vehicle computers provided in various places in the vehicle 100, and has, for example, an engine control function, a handle control function, a brake control function, and a data security function. For example, the ECU 91 for brake control receives information on the operation of the accelerator pedal and the brake pedal and the running speed via the pedal stroke sensor 93 and the vehicle speed sensor 92, converts the received information into a vehicle controlling signal, and applies driving force or braking force to the front wheels or the rear wheels by the vehicle controlling signal.

The IVI 54 includes a touch panel display 71 having both of an input device for inputting data according to the operation by the user 200 and a display device such as a liquid crystal display for displaying data.

The IVI 54 further includes an in-vehicle microphone 72, an in-vehicle memory 73, an in-vehicle speaker 74, and in-vehicle processing circuitry 75. In the description of the IVI 54, in order to distinguish the IVI 54 from the components of the portable terminal 10a (i.e., the speaker 11, the microphone 12, the display 13, the memory 14, and the processing circuitry 15), the term "in-vehicle" is added to the beginning of each component name of the IVI 54 as required.

The in-vehicle memory 73 is composed of, for example, a ROM, a RAM, or an HDD.

When the in-vehicle processing circuitry 75 executes and processes instructions on the basis of the programs stored in the in-vehicle memory 73, the IVI 54 implements various functions such as the above-described navigation function and location information service function.

As described above, the plurality of air outlets 51a and 51b of the air conditioner 51 are provided in the vehicle 100 so as to be positioned appropriately with respect to the target to which the conditioned air σ is sent.

The air outlet 51a provided for the front seats 53a and 53b is near the display 71 of the IVI 54 while being far from the rear seat 53c. Thus, even when the conditioned air σ is blown from the air outlet 51a, the conditioned air σ is not sufficiently detected by the portable terminal 10a of the user 200 seated in the rear seat 53c. However, even when it is not detected by the portable terminal 10a, this conditioned air σ forms a temperature interface near the IVI 54 and becomes a factor that hinders the ultrasonic communication.

Since the behavior of each of the target in-vehicle devices 51 to 54 changed by the control signal Ω is fed back to the portable terminal 10a, disturbance factors, which hinders the ultrasonic communication and cannot be directly detected by the portable terminal 10a, can be included in the calculation of the communication quality level.

The IVI 54, i.e., the communication environment sender 70 may send the information such as speed acquired by the respective sensors 91 to 95 at various positions of the vehicle from the in-vehicle sender 78 to the portable terminal 10a by ultrasonic waves. This is so that the information acquired by the respective sensors 91 to 95 is included in the calculation of the communication quality level. Further, the positional information of the vehicle 100 acquired by the positional information receiver 77 by the GPS sensor 96 can be hold by the communication environment sender 70.

The respective functions (17 to 20, 76 to 79) of the processing circuitry 15 and 75 of the remote controller 10 and the target in-vehicle devices 51 to 54 can be achieved by hardware processing such as an ASIC (Application Specific Integration Circuit) and an FPGA instead of software processing.

Further, these functions can be achieved by combining software processing and hardware processing.

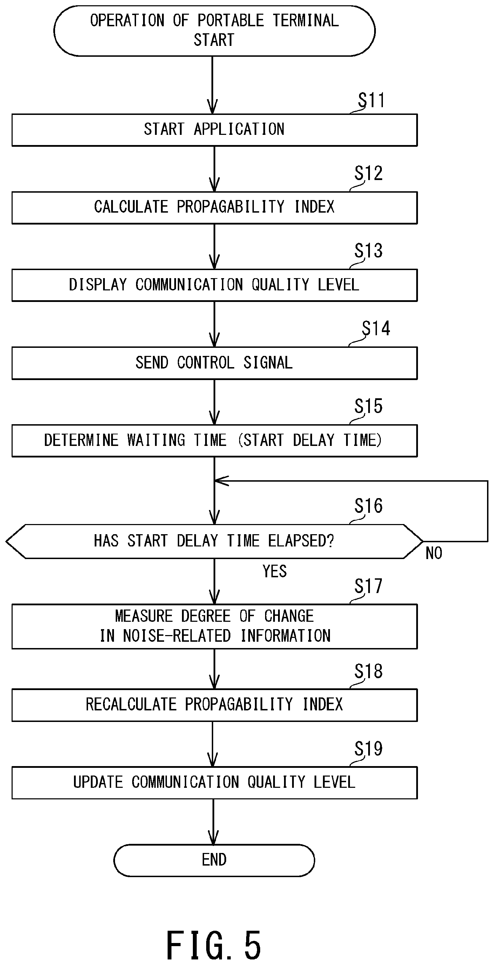

Next, a description will be given of the processing to be performed by the remote controller 10 of the present embodiment on the basis of the step number in the flowchart of Fig. 5 by referring to Fig. 1 to Fig. 4B as required.

First, in the step S11, the user 200 starts a remote-control application on the portable terminal 10a in order to remotely control the target in-vehicle devices 51 to 54.

When the remote-control application is started, the operation page 21 for each of the target in-vehicle devices 51 to 54 shown in Fig. 2A and Fig. 2B is displayed on the display screen 26 of the portable terminal 10a.

In the next step S12, the controller 19 calculates the propagability index on the basis of the noise-related information acquired by the information receiver 18 of the portable terminal 10a.

In the step S13, the controller 19 causes the display 13 to display the communication quality level on the status bar 27 with the icon 29.

In the next step S14, the transmitter/receiver 17 of the portable terminal 10a transmits the control signal Q toward at least one of the target in-vehicle devices 51 to 54.

The operation of the target in-vehicle device (at least one of 51 to 54, hereinafter, reference sign is omitted, as appropriate) changes in response to remote control by the control signal Ω. The response speed at this time differs for each of the in-vehicle device 51 to 54 to be remotely controlled.

Thus, in the next step S15, the information receiver 18 determines the delay time for the target in-vehicle device, which is the current target to be remotely controlled, on the basis of the map of the delay time shown in Fig. 4A.

The information receiver 18 waits until the delay time elapses (NO in the step S16). When the running state of the vehicle 100 changes during the delay time to start measuring, the information receiver 18 updates the delay time by adding the addition time corresponding to the change in running state (Fig. 4B) to the current start delay time, and waits until the updated start delay time elapses.

After the delay time elapses (YES in the step S16), the processing proceeds to the step S17 in which the information receiver 18 measures the degree of change in noise-related information.

In the case of controlling the air conditioner 51, the control signal Ω for changing air-flow volume is sent. In this example, when the control signal Ω indicating increase in air-flow volume is sent, the air-conditioning sound is detected by the microphone 12 of the portable terminal 10a, and it is checked whether the air-conditioning sound has actually become louder or not.

The propagability index is recalculated from this degree of change in the step S18, and the display of the communication quality level is updated in the step S19.

For example, in the case of the air conditioner 51, if air-flow volume has increased as instructed, it is determined that the communication environment is satisfactory. If air-flow volume has not increased, it is determined that the communication environment is bad.

Instead of the control signal Ω that causes the target in-vehicle devices 51 to 54 to operate in the manner specified by this control signal Ω, the control signal Ω may be a signal including information of a character string or a sequence. At this time, the target in-vehicle device having received the control signal Ω sends a reply signal including the character string or the sequence to the portable terminal 10a in response, and the controller 19 of the portable terminal 10a calculates an error rate of the reply signal. The controller 19 calculates the propagability index from the error rate and causes the display 13 to update the display of the communication quality level on the status bar 27. Depending on the error rate, the portable terminal 10a may adjust the executing by sending the operation signal Ω several times or by increasing the output strength of the control signal Ω. It is preferred that the control signal Q is repeatedly transmitted until the error rate is improved and the transmission of the control signal Q is terminated when the error rate is improved.

When the propagability index is low, it is desirable that the transmitter/receiver 17 transmits the control signal Q several times.

As another countermeasure, the control signal Ω can be accurately transmitted to the IVI 54 by transmitting for a longer time or by strengthening the output intensity of the control signal Q.

When the propagability index is low, a notification may be outputted by display or voice to request the user 200 to take a measure to enhance the propagability index. For example, the display 13 may display instruction words such as "Please direct the portable terminal toward the in-vehicle receiver" and/or "Please bring the portable terminal closer to the in-vehicle receiver", as described above.

According to the remote controller 10 of the embodiment as described above, the response of the target in-vehicle device having received a command of remote control is fed back so as to be reflected in the recalculation of the propagability index, and thus, the communication quality level matching the actual communication environment in the vehicle can be displayed. Thus, the operator of remote control can accurately grasp the communication environment.

Since the period from the transmission timing of the control signal Ω to start of measurement regarding the propagability index is determined by the delay time to start measuring specified for each of the target in-vehicle devices 51 to 54, the propagability index is calculated at the time when the operation requested by the control signal Ω is fully exhibited in the target in-vehicle device, i.e., in a state where the change in communication environment due to the operation change of the target in-vehicle device based on the command of the control signal Ω is fed back. Hence, the propagability index accurately reflects the actual communication environment on a real time-basis.

## Claims

1. A remote controller (10) comprising:
a speaker (11) configured to send an ultrasonic signal (Ω) that controls an operation of at least one in-vehicle device (51 to 54) and
an information receiver (18) configured to detect information related to noise sound inside a vehicle (100);
**characterized in that** the remote controller further comprises a controller (19) configured to calculate a propagability index of the ultrasonic signal (Ω) from the information related to noise sound; and
a display (13) configured to display the propagability index as communication quality level of the ultrasonic signal (Ω), wherein:
the information receiver (18) is configured to measure degree of change in operating mode of the at least one in-vehicle device (51 to 54) that changes the operating mode based on the ultrasonic signal (Ω); and
the controller (19) is configured to recalculate the propagability index based on the degree of change and update display of the communication quality level.

2. The remote controller (10) according to claim 1, wherein the degree of change is measured after a predetermined time elapses after transmission of the ultrasonic signal (Ω).

3. The remote controller (10) according to claim 1 or claim 2, wherein:
the at least one in-vehicle device comprises a plurality of in-vehicle devices (51 to 54); and
a delay time after transmission of the ultrasonic signal (Ω) to start measurement of the degree of change is preset for each of the plurality of in-vehicle devices (51 to 54) to be remotely controlled by the ultrasonic signal (Ω).

4. The remote controller (10) according to claim 3, wherein the delay time is extended when an operating mode of the vehicle changes during elapse of the delay time to start measuring.

## Patentansprüche

1. Fernsteuerung (10), umfassend:
einen Lautsprecher (11), der dazu konfiguriert ist, ein Ultraschallsignal (Ω) zu senden, das einen Betrieb mindestens einer fahrzeuginternen Vorrichtung (51 bis 54) steuert, und
einen Informationsempfänger (18), der dazu konfiguriert ist, Informationen zu erfassen, die sich auf Geräuschschall innerhalb eines Fahrzeugs (100) beziehen;
**dadurch gekennzeichnet, dass** die Fernsteuerung ferner eine Steuerung (19) umfasst, die dazu konfiguriert ist, einen Ausbreitungsindex des Ultraschallsignals (Ω) aus den Informationen bezüglich Geräuschschall zu berechnen; und
eine Anzeige (13), die dazu konfiguriert ist, den Ausbreitungsindex als Kommunikationsqualitätsniveau des Ultraschallsignals (Ω) anzuzeigen, wobei:
der Informationsempfänger (18) dazu konfiguriert ist, einen Änderungsgrad des Betriebsmodus der mindestens einen fahrzeuginternen Vorrichtung (51 bis 54) zu messen, die den Betriebsmodus basierend auf dem Ultraschallsignal (Ω) ändert; und
die Steuerung (19) dazu konfiguriert ist, den Ausbreitungsindex basierend auf dem Änderungsgrad neu zu berechnen und die Anzeige des Kommunikationsqualitätsniveaus zu aktualisieren.

2. Fernsteuerung (10) nach Anspruch 1, wobei der Änderungsgrad gemessen wird, nachdem eine vorbestimmte Zeit nach der Übertragung des Ultraschallsignals (Ω) verstrichen ist.

3. Fernsteuerung (10) nach Anspruch 1 oder Anspruch 2, wobei:
die mindestens eine fahrzeuginterne Vorrichtung eine Vielzahl von fahrzeuginternen Vorrichtungen (51 bis 54) umfasst; und
eine Verzögerungszeit nach der Übertragung des Ultraschallsignals (Ω) zum Starten der Messung des Änderungsgrads für jede der Vielzahl von fahrzeuginternen Vorrichtungen (51 bis 54), die durch das Ultraschallsignal (Ω) fernzusteuern sind, voreingestellt ist.

4. Fernsteuerung (10) nach Anspruch 3, wobei die Verzögerungszeit verlängert wird, wenn sich ein Betriebsmodus des Fahrzeugs während des Ablaufs der Verzögerungszeit zum Starten der Messung ändert.

## Revendications

1. Dispositif de commande à distance (10), comprenant :
un haut-parleur (11) configuré pour envoyer un signal ultrasonore (Ω) qui commande le fonctionnement d'au moins un dispositif embarqué (51 à 54) et
un récepteur d'informations (18) configuré pour détecter des informations liées au bruit à l'intérieur d'un véhicule (100) ;
**caractérisé en ce que** le dispositif de commande à distance comprend en outre un dispositif de commande (19) configuré pour calculer un indice de propagabilité du signal ultrasonore (Ω) à partir des informations relatives au bruit ; et
un affichage (13) configuré pour afficher l'indice de propagabilité en tant que niveau de qualité de communication du signal ultrasonore (Ω), dans lequel :
le récepteur d'informations (18) est configuré pour mesurer le degré de changement de mode de fonctionnement de l'au moins un dispositif embarqué (51 à 54) qui change le mode de fonctionnement sur la base du signal ultrasonore (Ω) ; et
le dispositif de commande (19) est configuré pour recalculer l'indice de propagabilité sur la base du degré de changement et mettre à jour l'affichage du niveau de qualité de communication.

2. Dispositif de commande à distance (10) selon la revendication 1, dans lequel le degré de changement est mesuré après qu'un temps prédéterminé s'est écoulé après la transmission du signal ultrasonore (Q).

3. Dispositif de commande à distance (10) selon la revendication 1 ou la revendication 2, dans lequel :
l'au moins un dispositif embarqué comprend une pluralité de dispositifs embarqués (51 à 54) ; et
un temps de retard après la transmission du signal ultrasonore (Ω) pour démarrer la mesure du degré de changement est préréglé pour chacun de la pluralité de dispositifs embarqués (51 à 54) à commander à distance par le signal ultrasonore (Q).

4. Dispositif de commande à distance (10) selon la revendication 3, dans lequel le temps de retard est prolongé lorsqu'un mode de fonctionnement du véhicule change pendant l'écoulement du temps de retard pour commencer la mesure.
